# EUROPÄISCHE PATENTSCHRIFT

(11) **EP 0 916 971 B1**
(45) Veröffentlichungstag und Bekanntmachung des Hinweises auf die Patenterteilung: **09.02.2005**
(21) Anmeldenummer: 98120543.8
(22) Anmeldetag: 30.10.1998
(51) Int. Cl.: G02B 3/00, G02B 5/04, G02B 26/08

(54) **Schaltbares, mikrooptisches Strahlenumlenksystem**
Switchable microoptical beam deviation system
Système microoptique commutable de déviation de faisceau

(30) Priorität: 11.11.1997 DE 19749799
(43) Veröffentlichungstag der Anmeldung: 19.05.1999
(73) Patentinhaber: Bodenseewerk Gerätetechnik GmbH, 88662 Überlingen (DE); Fraunhofer-Gesellschaft zur Förderung der angewandten Forschung e.V., 80686 München (DE)
(72) Erfinder: Tholl, Hans D., Dr., 88690 Überlingen (DE); Glöckner, Steffen, 07749 Jena (DE); Gross, Michael, Dr., 88662 Überlingen (DE); Göring, Rolf, Dr., 07749 Jena (DE); Schreiber, Peter, Dr., 07749 Jena (DE)
(74) Vertreter: Diehl Patentabteilung

(56) Entgegenhaltungen:
- US-A- 5 059 008
- US-A- 5 448 395
- US-A- 5 477 383
- US-A- 5 581 408

## Beschreibung

Die Erfindung betrifft ein schaltbares, mikrooptisches Strahlenumlenksystem mit einem Paar von hintereinander im Strahlengang angeordneter, gegeneinander quer zur Strahlenrichtung verschiebbaren mikrooptischen Linsenrastern.

Eine solche Anordnung ist bekannt durch die US 5 444 572 A. Dabei wird durch laterale Verschiebung der Linsenraster die "Blickrichtung" verändert. Bei dieser Anordnung liegt das Paar von Linsenrastern in einer Pupille eines Abbildungs-Strahlenganges. Auf die Linsenraster fallen parallele Lichtbündel. Jeder Objektpunkt leuchtet gleichzeitig viele Linsen des Linsenrasters aus. Da die Linsen der Linsenraster periodisch angeordnet sind, erfolgt dabei eine Modulation der Wellenfronten. Es treten Gitterordnungen auf. Das bedingt erhebliche chromatische Fehler. Diese Anordnung erfüllt daher nicht die an ein hochauflösendes System zu stellenden Ansprüche. Außerdem ist das System nicht isoplanatisch.

Es gibt weiterhin Spiegel-Arrays aus einer Vielzahl von mikromechanisch hergestellten, kippbaren und digital durch elektrische Steuersignale ansteuerbaren Spiegelelementen. Durch Kippen der Spiegel kann erreicht werden, daß auf das Spiegel-Array auffallende Lichtbündel entweder in einen Detektionskanal eines Detektor-Arrays oder an diesem vorbei geleitet werden. Die US 5 519 206 A beschreibt eine Anordnung, bei welcher durch ein Weitwinkelobjektiv ein Zwischenbild einer Objektszene in der Ebene des Spiegel-Arrays erzeugt wird. Die Pixelzahl des Spiegel-Arrays ist wesentlich größer als die Pixelzahl des Detektor-Arrays, also einer zweidimensionalen Anordnung von Detektor-Elementen. Deshalb werden durch ein zweites Abbildungsobjektiv jeweils mehrere Pixel oder Spiegelelemente des Spiegel-Arrays, eine Sub-Matrix, auf jeweils ein Detektor-Element des Detektor-Arrays abgebildet.

Wird nun jeweils nur eines der Spiegelelemente jeder Sub-Matrix in eine Stellung geschaltet, in welcher es ein darauffallendes Lichtbündel in das zweite Abbildungsobjektiv leitet, während jeweils alle anderen Detektor-Elemente der Sub-Matrizen ihre Lichtbündel an dem zweiten Abbildungsobjektiv vorbeileiten, dann kann durch sukzessives Schalten der Spiegelelemente und Speicherung der Bilder nach einem Zyklus ein Vollbild mit hoher Ortsauflösung gewonnen werden. Eine solche Spiegelanordnung erfordert eine Faltung des Strahlenganges. Es wird jedes Spiegelelement einzeln angesteuert. Dadurch sind solche Spiegel-Arrays recht aufwendig.

Die US 5 581 408 zeigt eine Anordnung, bei welcher ein paralleler Strahl durch zwei Teleskop-Anordnungen von Linsenrastern läuft. Die Anordnung umfasst ausschließlich Linsenraster. Die beiden negativen Elemente der zwei Teleskop-Anordnungen sind fest zueinander auf einem Substrat angeordnet. Jede der Teleskop-Anordnungen dient zum Verringern bzw. Erweitern des Strahlquerschnitts. Eine Winkelverschiebung des Strahls wird erreicht, indem das Substrat mit den beiden negativen Elementen bewegt wird. Bei dieser Bewegung des Substrats werden die Linsenraster zweier Linsensysteme gegeneinander bewegt. Dabei wird der Strahl seitlich parallel versetzt und um einen Winkel verschoben.

Der Erfindung liegt die Aufgabe zugrunde, ein schaltbares, mikrooptisches Strahlenumlenksystem so auszubilden, das einerseits einfach und kompakt aufgebaut und mit verfügbaren Aktuatoren einfach ansteuerbar ist, kurze Stellwege benötigt und damit kurze Umschaltzeiten ermöglicht, das aber andererseits für hochauflösende Systeme geeignet ist. Erfindungsgemäß wird diese Aufgabe bei einem schaltbaren, mikrooptischen Strahlenumlenksystem der eingangs genannten Art dadurch gelöst, daß durch ein erstes Abbildungsobjektiv eine Zwischenabbildung eines zugehörigen Objektfeldes erzeugt wird und die Linsenraster im wesentlichen in der Bildebene dieser Zwischenabbildung angeordnet sind.

Das Strahlenumlenksystem nach der Erfindung benötigt nur zwei mikrooptische, in sich starre Linsenraster, von denen eines durch einen oder mehrere Aktuatoren gegenüber dem anderen als Ganzes verschiebbar ist. Damit wird die Anordnung sehr einfach im Vergleich zu den einzeln verschwenkbar gelagerten und ansteuerbaren Spiegeln des Spiegel-Arrays. Die Ablenkung der Strahlen erfolgt im Durchgang ohne Faltung des Strahlenganges. Im Gegensatz zu dem bekannten Strahlenumlenksystem nach der US 5 444 572 A sitzen die Linsenraster jedoch nicht in einer Pupille sondern am Ort einer Zwischenabbildung. Dadurch treten keine Gitterordnungen auf. Jeder Zwischenbildpunkt wird nur von einem einzigen Linsenpaar der beiden Linsenraster übertragen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
Fig.1 ist eine schematische Darstellung und zeigt ein erstes Abbildungsobjektiv, das eine Zwischenabbildung erzeugt, ein Strahlenumlenksystem in der Ebene der Zwischenabbildung und ein zweites Abbildungsobjektiv, welches die Zwischenabbildung weiter z.B. auf einen Matrixdetektor abbildet.
Fig.2 ist eine schematische Darstellung und zeigt einen Schnitt durch ein mikrooptisches Strahlenumlenksystem mit zwei Linsenrastern.
Fig.3 ist eine schematische Darstellung und zeigt eine Vorderansicht eines mikrooptischen Strahlenumlenksystems.
Fig.4 bis 7 zeigen das mikrooptische Strahlenumlenksystem bei verschiedenen relativen Positionen der beiden Linsenraster und die zugehörigen Phasenverläufe der durch das Strahlenumlenksystem hindurchtretenden Lichtwellen.

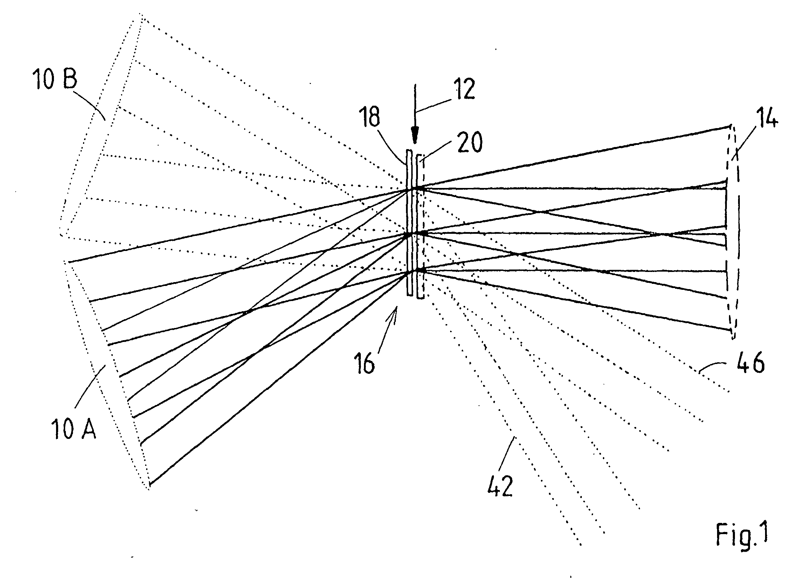

In Fig.1 sind mit 10A und 10B zwei erste Abbildungsobjektive bezeichnet. Das Abbildungsobjektiv 10A erzeugt eine Zwischenabbildung eines ersten Teilobjektfeldes in einer Bildebene 12. Durch das Abbildungsobjektiv 10B wird in der Bildebene 12 eine zweite Zwischenabbildung eines zweiten Teilobjektfeldes erzeugt. Die zweite Zwischenabbildung ist der ersten Zwischenabbildung in der Bildebene 12 überlagert. Ein zweites Abbildungsobjektiv 14 bildet die Zwischenabbildung z.B. auf einem Matrixdetektor ab. Die nur schematisch dargestellten ersten und zweiten Abbildungsobjektive haben, wie durch die Abbildungslichtbündel angedeutet, jeweils auf der Seite der Zwischenabbildung einen telezentrischen Strahlengang. Dadurch sind jeweils die Mittelstrahlen jedes einzelnen, einen Bildpunkt der Zwischenabbildung erzeugenden oder diesen Bildpunkt abbildenden Abbildungslichtbündels lediglich parallel gegeneinander verschoben. Jedem der ersten Abbildungsobjektive 10A und 10B ist damit ein definierter Winkel zugeordnet, unter dem die Abbildungslichtbündel für die verschiedenen Bildpunkte auf die Bildebene 12 treffen. Entsprechend erfaßt das zweite Abbildungsobjektiv 14 nur Abbildungslichtbündel, die mit ihren Mittelstrahlen unter einem bestimmten Winkel, z.B. senkrecht, zur Bildebene 12 verlaufen.

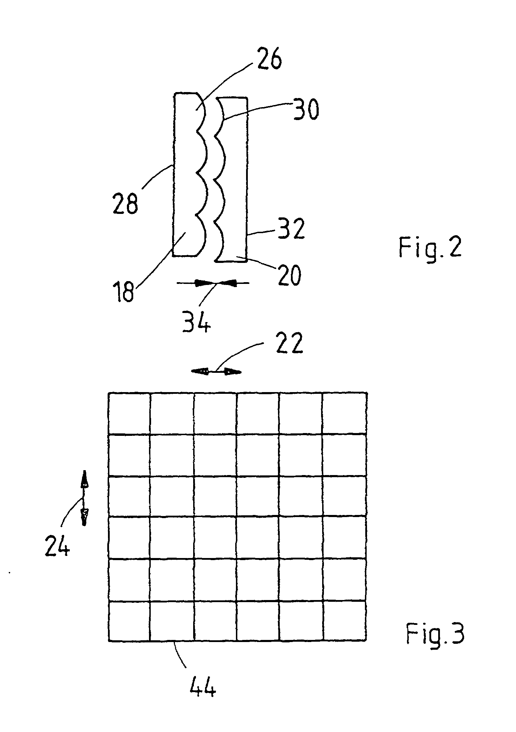

In der Bildebene 12 sitzt ein mikrooptisches Strahlenumlenksystem 16. Das mikrooptische Strahlenumlenksystem besteht aus zwei mikrooptischen Linsenrastern 18 und 20. Die beiden Linsenraster 18 und 20 sind durch (nicht dargestellte) Aktuatoren parallel zu ihrer Ebene in zwei zueinander senkrechten Richtungen relativ zueinander verschiebbar. Das ist in Fig.3 durch Doppelpfeile 22 und 24 angedeutet.

Wie aus Fig.2 ersichtlich ist, besteht das mikrooptische Linsenraster 18 aus einem Raster von Sammellinsen 26 mit einer planen Vorderfläche 28. Das mikrooptische Linsenraster 20 besteht aus einem Raster von Zerstreuungslinsen 30, wobei konkave Flächen der Zerstreuungslinsen 30 den konvexen Flächen der Sammellinsen 26 zugewandt sind und das Linsenraster 20 eine plane hintere Fläche 32 aufweist. Zwischen den mikrooptischen Linsenrastern 18 und 20 ist ein Luftspalt 34 gebildet, der eine seitliche Relativverschiebung der beiden Linsenraster 18 und 20 zuläßt.

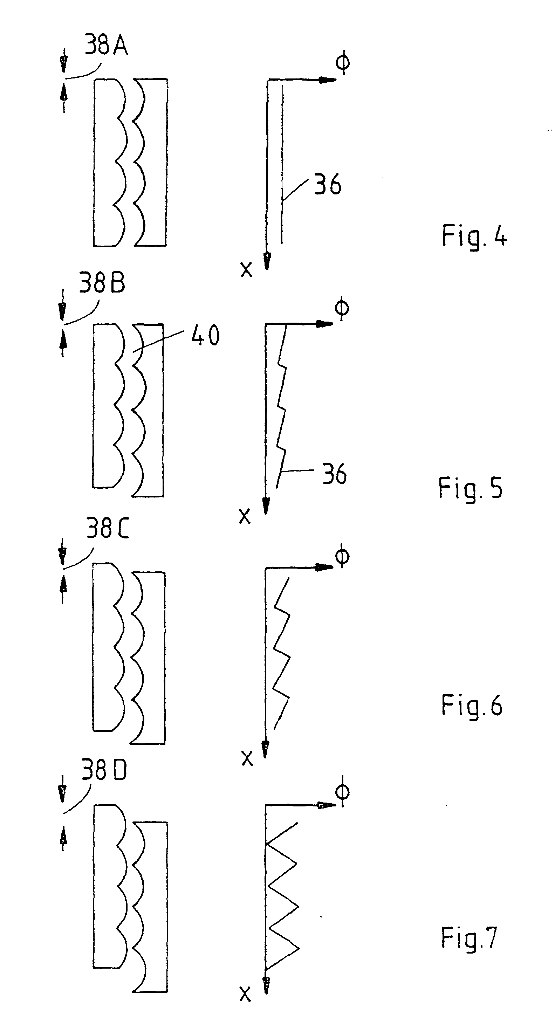

Wie aus den Figuren 4 bis 7 ersichtlich ist, bewirkt eine Relativverschiebung der beiden mikrooptischen Linsenraster und damit eine Relativverschiebung jedes Paares von Sammel- und Zerstreuungslinsen 26 bzw. 30 eine Kippung der Phasenebenen 36 der durch das betreffende Paar hindurchtretenden Lichtbündel und damit eine Ablenkung. In Fig.4 fallen die optischen Achsen der Sammel- und Zerstreuungslinsen 26 bzw. 30 jedes Paares zusammen. Die Relativverschiebung 38A der mikrooptischen Linsenraster ist null.In diesem Fall wirken die beiden Linsenraster 18 und 20 wie eine planparallele Platte. Die Phasenebenen 36 sind parallel zu den planen Flächen 28 und 32 der Linsenraster 18 bzw. 20. Bei einer Relativverschiebung 38B der Linsenraster 18 und 20 sind die Sammelund Zerstreuungslinsen 26 und 30 jedes Paares gegeneinander seitlich verschoben. Der Luftspalt 40 zwischen den beiden Linsen wirkt dabei wie ein Keil: Im Bereich des in Fig.5 oberen Teils des Luftspaltes 40 läuft die Lichtwelle auf einer größeren Strecke durch das Material der Linsenraster (n>1) und eine kleinere Strecke in Luft als im unteren Teil. Dort läuft also, wie dargestellt, die Phase vor, was einer Ablenkung des durch dieses Paar von Sammel- und Zerstreuungslinsen hindurchtretenden Lichtbündels entspricht. Je größer die seitliche Relativverschiebung 38C oder 38D der Linsenraster 18 und 20 wird, desto ausgeprägter wird dieser Effekt, wie in den Figuren 6 und 7 dargestellt ist.

Es erfolgt somit eine Ablenkung der die einzelnen Bildpunkte erzeugenden Lichtbündel. Diese Ablenkung erfolgt in der Bildebene. Jeder mikrooptischen Linse ist nur ein Bildpunkt oder kleiner Bildbereich zugeordnet.

In dem Zustand von Fig. 1 fallen die Mittelstrahlen der Abbildungslichtbündel der durch das erste Abbildungsobjektiv 10A erzeugten Zwischenabbildung eines von dem Abbildungsobjektiv 10A erfaßten Teilobjektfeldes nach der Umlenkung im wesentlichen senkrecht zur Bildebene auf das zweite Abbildungsobjektiv 14. Durch den objektseitig telezentrischen Strahlengang des zweiten Abbildungsobjektivs 14 werden nur diese Abbildungslichtbündel von dem zweiten Abbildungsobjektiv 14 erfaßt. Nur das von dem Abbildungsobjektiv 10A erfaßte Teilobjektfeld wird durch das zweite Abbildungsobjektiv 14 z.B. auf einem bildauflösenden Matrixdetektor mit einer zweidimensionalen Anordnung von Detektorelementen abgebildet. Das weitere erste" Abbildungsobjektiv 10B erzeugt zwar ebenfalls eine Zwischenabbildung eines von diesem Abbildungsobjektiv 10B erfaßten Teilobjektfeldes in der Bildebene 12 und überlagert der Zwischenabbildung des vom Abbildungsobjektiv 10A erfaßten Teilobjektfeldes. Die Strahlen 42 der Abbildungslichtbündel des Abbildungsobjektivs 10B verlaufen aber bei der dargestellten Position des mikrooptischen Strahlenablenksystems 16 unter einem solchen Winkel zur Ebene der Linsenraster 18 und 20, daß diese Abbildungslichtbündel nicht von dem zweiten Objektiv 14 erfaßt werden. Das ist in Fig.1 gestrichelt dargestellt.

Durch einen Aktuator, wie er in Fig.3 durch den Doppelpfeil 24 dargestellt ist, können nun die beiden Linsenraster 18 und 20 in verschiedene, definierte relative Positionen verstellt werden, die jeweils einem definierten Ablenkungswinkel entsprechen. Die Positionen und Ablenkungswinkel können dann so gewählt werden, daß jeweils die abgelenkten Abbildungslichtbündel von einem der ersten Abbildungsobjektive 10A oder 10B auf das zweite Abbildungsobjektiv 14 geleitet werden, d.h. z.B. senkrecht zu den Ebenen der Linsenraster 18 und 20 verlaufen. Das kann durch kleine Relativverschiebungen der Linsenraster 18 und 20 erreicht werden. Als Aktuatoren können dabei handelsübliche Piezosteller verwendet werden. Damit läßt sich eine sehr schnelle Umschaltung zwischen den verschiedenen Teilobjektfeldern erreichen.

. Bei einer Ausführung des schaltbaren, mikrooptischen Strahlenumlenksystems wird im infraroten Spektralbereich mit Wellenlängen zwischen 3µm und 5µm gearbeitet. Sammelund Zerstreuungslinsen 26 und 30 haben etwa die gleiche Brennweite. Der Abstand 34 ist geringer als die axiale Ausdehnung des Punktbildes (Schärfentiefe). Dadurch wirken die beiden Linsenraster 18 und 20 in Kombination wie eine dünne Phasenplatte. Durch die genaue Wahl der Brennweiten und des Abstandes 34 kann die Divergenz der das Strahlenumlenksystem 16 verlassenden Lichtbündel beeinflußt werden. Dadurch kann diese Divergenz an die Parameter des zweiten Abbildungsobjektivs 14 angepaßt werden. Bei einer lateralen Relativverschiebung der beiden Linsenraster 18 und 20 um einige Mikrometer aus der Ausgangsstellung von Fig.4 werden die Abbildungslichtbündel des Abbildungsobjektivs 10A so abgelenkt, daß sie, wie in Fig.1 dargestellt, telezentrisch von dem Abbildungsobjektiv 14 erfaßt und auf einen Matrixdetektor geleitet werden. Die Abbildungslichtbündel des Abbildungsobjektivs 10B verfehlen das Abbildungsobjektiv 14. Entsprechend können durch eine Relativverschiebung der Linsenraster 18 und 20 in entgegengesetzter Richtung die Abbildungslichtbündel 46 des Abbildungsobjektivs 10B auf das zweite Abbildungsobjektiv 14 gelenkt werden.

## Patentansprüche

1. Schaltbares, mikrooptisches Strahlenumlenksystem mit einem Paar von hintereinander im Strahlengang angeordneter, gegeneinander quer zur Strahlenrichtung verschiebbaren mikrooptischen Linsenrastern (18,20), **dadurch gekennzeichnet, daß** durch ein erstes Abbildungsobjektiv (10A, 10B) eine Zwischenabbildung eines zugehörigen Objektfeldes erzeugt wird und die Linsenraster (18,20) im wesentlichen in der Bildebene (12) dieser Zwischenabbildung angeordnet sind.

2. Schaltbares, mikrooptisches Strahlenumlenksystem nach Anspruch 1, **dadurch gekennzeichnet, daß** die Linsenraster ein Raster (18) mit Sammellinsen (26) und ein Raster (20) mit Zerstreuungslinsen (30) sind.

3. Schaltbares, mikrooptisches Strahlenumlenksystem nach Anspruch 1, **dadurch gekennzeichnet, daß** die Linsenraster (18,20) im ultravioletten, sichtbaren und infraroten Spektralbereich durchlässig sind.

4. Schaltbares, mikrooptisches Strahlenumlenksystem nach einem der Ansprüche 1 bis 3, **dadurch gekennzeichnet, daß** die Zwischenabbildung durch ein zweites Abbildungsobjektiv (14) weiter abgebildet wird, das abbildende Strahlen aus einem begrenzten Winkelbereich erfaßt.

5. Schaltbares, mikrooptisches Strahlenumlenksystem nach Anspruch 4, **dadurch gekennzeichnet, daß** die Zwischenabbildung durch das erste Abbildungsobjektiv (10A, 10B) in einem bildseitigen telezentrischen Strahlengang erzeugbar ist.

6. Schaltbares, mikrooptisches Strahlenumlenksystem nach Anspruch 4 oder 5, **dadurch gekennzeichnet, daß** die Zwischenabbildung durch das zweite Abbildungsobjektiv (14) in einem objektseitigen telezentrischen Strahlengang weiter abbildbar ist.

7. Schaltbares, mikrooptisches Strahlenumlenksystem nach einem der Ansprüche 4 bis 6, **dadurch gekennzeichnet, daß**
(a) durch eine Mehrzahl von ersten Abbildungsobjektiven überlagerte Zwischenabbildungen verschiedener Teile eines Gesichtsfeldes durch Abbildungs-Strahlengänge erzeugbar sind, die unterschiedliche Winkel mit den mikrooptischen Linsenrastern bilden, und
(b) durch relative Verschiebung der Linsenraster wahlweise die Abbildungs-Strahlengänge jeweils eines der ersten Abbildungsobjektive in den begrenzten Winkelbereich des zweiten Abbildungsobjektivs lenkbar ist.

## Claims

1. Switchable, micro-optical ray- or beam-deflecting system having a pair of micro-optical lens rasters (18, 20) which are disposed one behind the other in the path of the beam and can be displaced relative to one another at an angle to the direction of the beam, **characterized in that** an intermediate image of an associated object field is produced by a first image-forming objective (10A, 10B) and the lens rasters (18, 20) are disposed substantially in the image plane (12) of this intermediate image.

2. Switchable, micro-optical beam-deflecting system according to Claim 1, **characterized in that** the lens rasters comprise one raster (18) with converging lenses (26) and one raster (20) with diverging lenses (30).

3. Switchable, micro-optical beam-deflecting system according to Claim 1, **characterized in that** the lens rasters (18, 20) are transparent in the ultraviolet, visible and infrared spectral region.

4. Switchable, micro-optical beam-deflecting system according to one of Claims 1 to 3, **characterized in that** the intermediate image is further reproduced by a second image-forming objective (14), which detects image-forming beams from a limited angular region.

5. Switchable, micro-optical beam-deflecting system according to Claim 4, **characterized in that** the intermediate image can be produced by the first image-forming objective (10A, 10B) in a telecentric beam path on the image side.

6. Switchable, micro-optical beam-deflecting system according to Claim 4 or 5, **characterized in that** the intermediate image can be further reproduced by the second image-forming objective (14) in a telecentric beam path on the object side.

7. Switchable, micro-optical beam-deflecting system according to one of Claims 4 to 6, **characterized in that**
(a) due to a plurality of first image-forming objectives, superimposed intermediate images of various parts of a field of view can be produced by image beam paths forming different angles with the micro-optical lens rasters, and
(b) by relative displacement of the lens rasters, in each case the image beam paths of one of the first image-forming objectives can be directed as desired into the limited angular region of the second image-forming objective.

## Revendications

1. Système micro-optique commutable de déviation de rayons comportant une paire de grilles de lentilles micro-optiques (18, 20) disposées les unes derrière les autres dans le parcours des rayons et pouvant coulisser les unes par rapport aux autres transversalement à la direction des rayons, **caractérisé en ce que** par un premier objectif de reproduction (10A, 10B) on produit une reproduction intermédiaire d'un champ d'objet correspondant et les grilles de lentilles (18, 20) sont disposées sensiblement dans le plan d'image (12) de cette reproduction intermédiaire.

2. Système micro-optique commutable de déviation de rayons selon la revendication 1, **caractérisé en ce que** les grilles de lentilles sont une grille (18) avec des lentilles convergeantes (26) et une grille (20) avec des lentilles divergeantes (30).

3. Système micro-optique commutable de déviation de rayons selon la revendication 1, **caractérisé en ce que** les grilles de lentilles (18, 20) sont perméables dans le domaine spectral ultraviolet, visible et infrarouge.

4. Système micro-optique commutable de déviation de rayons selon l'une des revendications 1 à 3, **caractérisé en ce que** la reproduction intermédiaire est encore reproduite par un deuxième objectif de reproduction (14) qui capte les rayons de reproduction provenant d'une plage angulaire limitée.

5. Système micro-optique commutable de déviation de rayons selon la revendication 4, **caractérisé en ce que** la reproduction intermédiaire peut être produite par le premier objectif de reproduction (10A, 10B) dans un faisceau de rayons télécentré côté image.

6. Système micro-optique commutable de déviation de rayons selon la revendication 4 ou 5, **caractérisé en ce que** la reproduction intermédiaire peut encore être reproduite par le deuxième objectif de reproduction (14) dans un faisceau de rayons télécentré côté objet.

7. Système micro-optique commutable de déviation de rayons selon l'une des revendications 4 à 6, **caractérisé en ce que**
par une pluralité de premiers objectifs de reproduction on peut produire des reproductions intermédiaires superposées de différentes parties d'un champ visuel par des faisceaux de rayons de reproduction qui forment différents angles avec les grilles de lentilles micro-optiques, et
par déplacement relatif des grilles de lentilles on peut diriger au choix les faisceaux de rayons de reproduction de l'un des premiers objectifs de reproduction dans la plage angulaire limitée du deuxième objectif de reproduction.
